## Europäisches Patentamt

(19) **European Patent Office**

**Office européen des brevets**

(11) Veröffentlichungsnummer: **0 027 618**
**B1**

(12) # EUROPÄISCHE PATENTSCHRIFT

(45) Veröffentlichungstag der Patentschrift:
27.07.83

(51) Int. Cl.³: **A 61 B 10/00,** G 01 N 29/00,
G 01 S 7/52, G 01 S 15/00,
G 01 S 15/08

(21) Anmeldenummer: 80106184.7

(22) Anmeldetag: 10.10.80

(54) **Vorrichtung zur Ultraschallabtastung.**

(30) Priorität: 17.10.79 DE 2942049

(43) Veröffentlichungstag der Anmeldung:
29.04.81 Patentblatt 81/17

(45) Bekanntmachung des Hinweises auf die Patenterteilung:
27.07.83 Patentblatt 83/30

(84) Benannte Vertragsstaaten:
AT CH DE FR GB LI NL

(56) Entgegenhaltungen:
**EP-A-0 002 061**
**DE-A-2 854 749**
**US-A-4 159 462**
**US-A-4 173 007**

(73) Patentinhaber: **SIEMENS AKTIENGESELLSCHAFT,**
**Berlin und München Wittelsbacherplatz 2,**
**D-8000 München 2 (DE)**

(72) Erfinder: **Borburgh, Jacques, Dr.-Ing., Eichenstrasse 10,**
**D-8521 Poxdorf (DE)**
Erfinder: **Naefe, Gerhard, Felix-Klein-Strasse 17b,**
**D-8520 Erlangen (DE)**
Erfinder: **Rost, Helmut, Dipl.-Ing.,**
**Simon-Dach-Strasse 8, D-8521 Uttenreuth (DE)**

## Vorrichtung zur Ultraschallabtastung

Die Erfindung bezieht sich auf eine Vorrichtung zur Ultraschallabtastung mit Ultraschall-Applikator, der durch eine Vielzahl einzelner Wandlerelemente zum Aussenden von Ultraschallsignalen und zum Empfang der Echosignale ausgebildet ist, wobei wenigstens im elektrischen Empfangskreis eine Verzögerungseinrichtung vorgesehen ist, die die anfallenden Echosignale für jedes Wandlerelement zeitlich so verzögert, daß sich in der zeitlichen Reihenfolge des Anfallens von Signalen an den einzelnen Elementen am Ausgang der Verzögerungseinrichtung Phasengleichhheit der Einzelsignale ergibt.

Eine Vorrichtung dieser Art ist beispielsweise durch Ultrasonics Symposium Proceedings, IEEE Cat. 1977, Seiten 250 bis 254, bekannt. Diese Vorrichtung arbeitet mit Speichergliedern als Teil der Verzögerungseinrichtung, wobei die einzelnen Speicher Ganzzeilenspeicher sind, die also eine komplette Ultraschallzeile speichern. Das Ein- und Auslesen einer Zeile erfolgt im sog. Wechselpufferspeicherprinzip, d. h. es wird in einem von zwei Zeilenspeichern jeweils Information immer gerade eingelesen, während aus dem zugeordneten zweiten Speicher Information ausgelassen wird. Das Prinzip eines solchen Wechselpufferspeichers ist u. a. auch in der DE-PS 2 629 895 beschrieben. Der Einsatz von Ganzzeilenspeichern hat jedoch den Nachteil, daß bei einer größeren Anzahl von Wandlerelementen unnötig viel Speicherkapazität benötigt wird.

Aufgabe vorliegender Erfindung ist es, eine Vorrichtung der eingangs genannten Art aufzubauen, die mit optimal geringer Speicherkapazität der Verzögerungsspeicher auskommt.

Die Aufgabe wird erfindungsgemäß dadurch gelöst, daß die Verzögerungseinrichtung eine Vielzahl von Teilzeilenspeichern umfaßt, von denen jeweils wenigstens immer drei einem einzelnen Wandlerelement zugeordnet sind, wobei die Speicherkapazität jedes Teilzeilenspeichers für jedes einzelne Wandlerelement einen solchen Wert aufweist, der wenigstens der maximalen Verzögerungszeit der Wandlerelementanordnung entspricht und wobei im Dreierverband der Teilzeilenspeicher eines jeden Wandlerelements eine solche Steuerung vorgesehen ist, daß, beginnend mit dem jeweils ersten Wandlerelement, das von sämtlichen Elementen als erstes mit Information beaufschlagt wird, sowie für jedes folgende Wandlerelement die dort anfallende Information in die Speicher des zugeordneten Dreierverbandes sequentiell eingeschrieben wird so lange, bis auch am letzten Wandlerelement, das von allen Elementen als letztes Information empfängt, wenigstens der erste Teilzeilenspeicher des Dreierverbandes, der zu diesem letzten Element gehört, mit Information gefüllt ist und dann ein Lesestartimpuls gegeben wird, aufgrund dessen die bis zu diesem Zeitpunkt in sämtlichen Speichern eingespeicherte Information gleichzeitig ausgelesen wird.

Bei der Erfindung hängt die Speicherkapazität eines Teilzeilenspeichers im wesentlichen nur von der maximalen Verzögerungszeit der Wandlerelementanordnung ab. Da die Verzögerungszeit auch bei großen Schwenkwinkeln im allgemeinen sehr klein ist — sie beträgt einen Bruchteil, z. B. ein 1/16 oder noch weniger, der Gesamtspeicherzeit eines Ganzzeilenspeichers —, so ergibt sich immer relativ kleine benötigte Speicherzeit und damit auch optimal niedrige Speicherkapazität des einzusetzenden Teilzeilenspeichers. Bei einer Vielzahl von Wandlerelementen der Wandlerelementanordnung ist demnach der Gesamtaufwand an Speicherkapazität optimal gering.

Die Erfindung läßt sich vorteilhaft bei sog. phased-Arrays, z. B. zur Durchführung von Sektorabtastungen durch Strahlschwenkung aufgrund unterschiedlicher Signalverzögerung, anwenden. Ebensogut ist ein Einsatz in Kombination mit dynamischer Fokussierung oder auch ein Einsatz bei Linear-Array ohne Strahlschwenkung, aber mit dynamischer Fokussierung, möglich. Bei Kombination eines Strahlschwenkverfahrens mit einer dynamischen Fokussierung tritt in vorteilhafter Ausgestaltung der Erfindung zur maximalen Verzögerungszeit der Wandleranordnung zusätzlich auch noch eine Fokuseinstellzeit, die bei der Ansetzung der Mindestkapazität eines Teilzeilenspeichers berücksichtigt werden muß. Wird in weiterer Ausgestaltung der Erfindung nur mit dynamischer Fokussierung gearbeitet, so tritt diese Fokuseinstellzeit an die Stelle der maximalen Verzögerungszeit der Wandleranordnung. Letztere ist Null, da ja ohne Strahlschwenkung gearbeitet wird, so daß hiervon herrührende Verzögerungszeiten nicht berücksichtigt zu werden brauchen. Insgesamt gesehen bietet die Erfindung also die Möglichkeit vielfältiger Anwendung in unterschiedlichsten Betriebsweisen bei äußerst geringem Gesamtaufwand an Speicherkapazität. Eine besonders herausragende Betriebsart ist dabei jene des Digital-Betriebs. Hierzu werden die anfallenden Echoinformationen digitalisiert und dann in Teilzeilenspeichern auf Digitalbasis, insbesondere in RAM-Speichertechnik, entsprechend digital weiterverarbeitet. Der Übergang auf Digitaltechnik hat den erheblichen Vorteil, daß die Gesamtanordnung aller Betriebsarten soft-waremäßig zu steuern ist. Dies ermöglicht nicht nur problemlose und rasch umstellbare Ablaufsteuerung; da in der Steuerschaltung nirgendwo mehr analoge Ultraschallsignale geschaltet werden müssen (wie z. B. LC-Technik), können auch keine Schaltknacks mehr auftreten, die sich im Bildaufbau als Störechos störend bemerkbar machen. Gegenüber CCD-Speichern (charge coupled device) bzw. auch BBD-Speichern (bucket brigade device oder Eimerkettenspeicher) wird zudem auch noch erhöhte Stabilität erreicht.

Weitere Vorteile und Einzelheiten der Erfindung ergeben sich aus der nachfolgenden Beschreibung eines Ausführungsbeispiels anhand der Zeichnung in Verbindung mit den Unteransprüchen. Es zeigt

Fig. 1 im Diagramm die Funktionsweise der Erfindung bei Anwendung auf reine Strahlschwenkung oder in Kombination mit dynamischer Fokussierung,

Fig. 2 ein Diagramm entsprechend Fig. 1 für Anwendung nur auf dynamische Fokussierung,

Fig. 3 das Prinzipschaltbild der Erfindung bezogen auf ein einzelnes Wandlerelement,

Fig. 4 das Prinzipschaltbild der Erfindung für die Gesamtanordnung von Wandlerelementen.

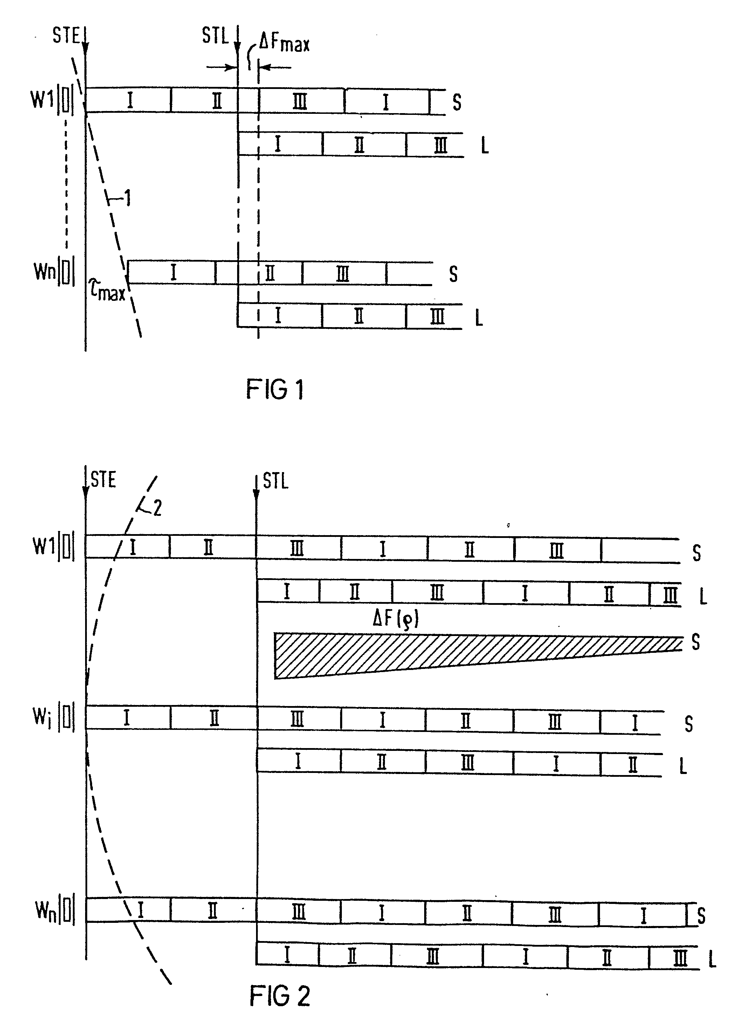

Die Fig. 1 zeigt auf der linken Seite des Diagramms in schematischer Andeutung eine Wandlerelementanordnung von Wandlerelementen W1 bis Wn. Der Strahlschwenk ist so gewählt (angedeutet durch gestrichelte Verzögerungslinie 1), daß Echosignale, die nach Aussendung von Sendesignalen wieder empfangen werden, als Information erst am Wandlerelement W1 eintreffen, während nachfolgende Wandlerelemente W2, W3 etc. Echoinformation erst mit zunehmenden Verzögerungszeiten empfangen. Das letzte Element Wn der Wandlerelementreihe empfängt Echoinformation als letztes aller Elemente mit einer maximalen Zeitverzögerung $\tau_{max}$. Die Abtastrichtung des Ultraschallstrahles ist beliebig (z. B. nach Programm) veränderbar. Durch entsprechende Vorwahl unterschiedlicher Verzögerungszeiten ändert sich auch der Winkel der gestrichelten Verzögerungslinie 1, zu der ja die Hauptstrahlrichtung der Ultraschallabtaststrahlen im wesentlichen senkrecht steht. Das Gesamtkonzept ist jedoch immer so, daß die maximale Verzögerungszeit des jeweils immer zuletzt getroffenen Wandlerelementes (im vorliegenden Falle Wn oder W1 bei Spiegelung der Abstrahlrichtung an der Symmetrieachse der Wandlerelementanordnung) den vorgewählten Wert $\tau_{max}$ nicht überschreitet.

Wesentliches Merkmal ist nun, daß jedem Wandlerelement W1 bis Wn der Wandlerelementanordnung ein Dreierverband von Teilzeilenspeichern zugeordnet ist, von denen also jeder immer nur einen ganz bestimmten Bruchteil der Gesamtzeile (z. B. ein Sechzehntel der Gesamtzeile) dynamisch speichert. In der Fig. 1 sind die Teilzeilenspeicher eines Dreierverbandes jeweils mit I, II, III bezeichnet. Alle Teilzeilenspeicher eines Dreierverbandes sind fortlaufend nacheinander mit Information füllbar. Der Eintritt von Inforamtion in den Dreierverband ist so, daß beginnend mit dem jeweils immer zuerst von Information getroffenen Wandlerelement (im vorliegenden Falle W1) die Information dieses Elements sequentiell nacheinander in die einzelnen Teilzeilenspeicher I bis III eingelesen wird, solange, bis wenigstens der erste Teilzeilenspeicher I des von der gesamten Reihe W1 bis Wn immer zuletzt von Informationen getroffenen Wandlerelementes (im vorliegenden Falle Wn) mit dieser Information gefüllt ist. In diesem Falle wird dann ein Lesestartimpuls gesetzt, aufgrund dessen dann die in sämtlichen Speichern angelaufene Information gleichzeitig ausgelesen wird.

Im Diagramm der Fig. 1 ist der Startzeitpunkt STE zum Schreiben S durch das Eintreffen der ersten Information am ersten Wandlerelement W1 der Wandlerelementanordnung angegeben. Für jedes nachfolgende Wandlerelement Wi wird der Verzögerungszeit entsprechend, mit der weitere Information verspätet eintrifft, gegenüber STE entsprechend verzögert eingeschrieben. Hinsichtlich des letzten Wandlerelementes Wn erfolgt schließlich um die Zeit $\tau_{max}$ verzögerte Einschreibung von Information in den ersten Teilzeilenspeicher I. Ist dieser erste Teilzeilenspeicher I des Wandlerelementes Wn jedoch gefüllt, so kann ein Lesestartimpuls zum gleichzeitigen Auslesen L der Information sämtlicher Teilzeilenspeicher aller Wandlerelemente W1 bis Wn gegeben werden. In der Fig. 1 ist der Startzeitpunkt STL für den Lesestartimpuls noch etwas verzögert, da in die Speicherzeit eine Einstellzeit $\Delta F_{max}$ für den Fokus einbezogen ist. Dieses zusätzliche Zeitintervall findet immer denn Berücksichtigung, wenn mit dem Strahlschwenk gleichzeitig auch eine dynamische Fokussierung durchgeführt wird.

Die Fig. 2 zeigt das Prinzip der Fig. 1 ohne Strahlschwenk lediglich für dynamische Fokussierung. In diesem Falle ist also die Verzögerungszeit $\tau_{max}=0$, und es tritt lediglich die vorstehend angeführte Fokuseinstellzeit $\Delta F_{max}$ in Aktion. Diese Fokuseinstellzeit ändert sich in Abhängigkeit von der Tiefe $\varrho$ des Untersuchungsobjektes, aus der Echosignale jeweils scharf (fokussiert) empfangen werden sollen. Das Änderungsdiagramm der Einstellzeit ist als $\Delta F (\varrho)$ in der Fig. 2 schematisch mit eingezeichnet. Aufgrund der rein dynamischen Fokussierung ergibt sich für jeden Fokusabstand ein anderer Verzögerungsverlauf, z. B. entsprechend der gekrümmten gestricheleten Linie 2.

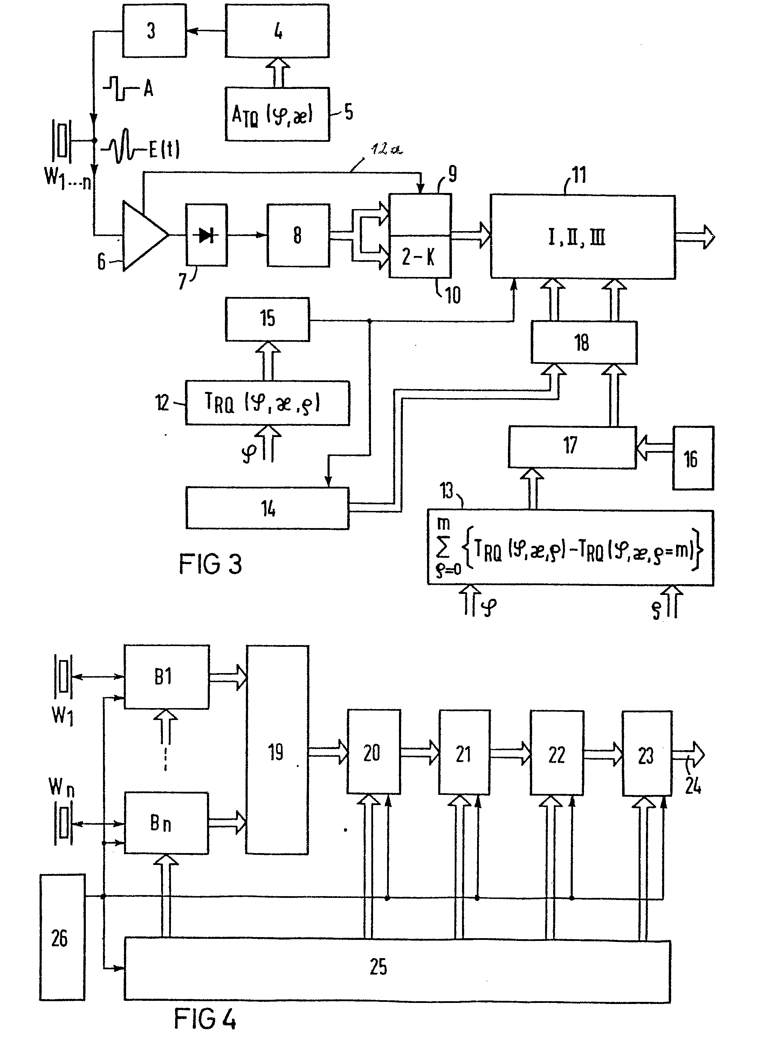

Das Prinzipschaltbild zur Durchführung eines Funktionsprinzips gemäß den Fig. 1 oder 2 zeigt für ein einzelnes Wandlerelement W1 bis Wn die Fig. 3. In der Fig. 3 ist auf der Seite der Sendeschaltung der Sendepulserzeuger für den Sendeimpuls A mit 3 bezeichnet. Der Sendepulserzeuger 3 erzeugt die Sendeimpulse im Takt der Triggerimpulse eines Leitgenerators 4, der durch einen Programmgeber 5 gesteuert ist, in dem das Sendeprogramm nach der Beziehung $A_{TQ} (\varphi, \varkappa)$ auf Abruf gespeichert ist. A bedeutet den Sendefall und T die jeweilige Sende-Verzögerungszeit, wobei Q andeutet, daß quantisierte Werte vorliegen. $\varphi$ ist der Schwenkwinkel der Abstrahlung, und $\varkappa$ ist der Ort eines angesteuerten Wandlerelements in der Reihe der Wandlerelementanordnung. Die aufgrund der Aussendung eines Sendeimpulses an einem Wandlerelement oder einer Wandlerelementgruppe im Untersuchungsobjekt erzeugten und wieder empfangenen Ultraschallechosignale werden nach Rückwandlung in entsprechende elektrische Signale E (t) durch das jeweilige Wandlerelement einem Hochfrequenzverstärker 6 (80-dB-Verstärker) zugeleitet. Die verstärkten Echosignale werden dann in einem Doppelweggleichrichter 7 gleichgerichtet, und das gleichgerichtete Signal wird anschließend über einen Analog-Digital-Wandler 8 auf eine Kombinationsschaltung aus einem Datenmultiplexer 9 und einem Zweierkomplementbildner 10 gegeben. Am Ausgang der Kombinationsschaltung 9 und 10 liegt dann schließlich der Dreierverband 11 der Teilzeilenspeicher I, II, III. Im vorliegenden Falle handelt es sich um drei RAM-Speicher, mit einer Kapazität von z. B. 256 × 8 bit.

Der Einsatz einer Kombinationsschaltung eines Datenmultiplexers 9 mit einem Zweierkomplementbildner 10 hat folgende wesentliche Aufgabe: Bei Sichtbarmachung der Echosignale besteht einerseits der Wunsch nach optimal hoher Auflösung. Hierzu werden jedoch im allgemeinen Analog-Digital-Wandler hoher bit-Zahl benötigt, die erheblich kostenintensiv sind. Die Schaltungsanordnung erfordert aber auch optimale Zuordnung empfangener Signale in der Phase nach erfolgter Verzögerung. Die hierzu benötigte Summierschaltung sollte möglichst einfach aufgebaut sein. Beide Probleme werden durch die Schaltungsanordnung 6 bis 10 in überraschend einfacher Weise gelöst. Die Lösung geht davon aus, daß die anfallenden Echosignale sowohl positive als auch negative Komponenten, bezogen auf Nullinienpotential, beinhalten. Ein Analog-Digital-Umsetzer müßte demnach den gesamten dynamischen Bereich von höchster negativer Amplitude bis höchster positiver Amplitude umsetzen, wozu jeoch, um zu einem annehmbaren Wert der Auflösung gelangen zu können, Analog-Digital-Umsetzer relativ hoher bit-Zahl benötigt würden. Sehr viel günstigere Bedingungen ergeben sich aber, wenn das anfallende Echosignal vor Umsetzung gleichgerichtet wird. Nach Gleichrichtung konzentriert sich die Auflösung nur noch auf Signalanteile einer einzigen Polarität; bei gleich gutem Auflösungsgrad wird dadurch ein bit weniger benötigt. Damit verringert sich die zur Auflösung benötigte bit-Zahl des Analog-Digital-Wandlers ebenfalls um 1 bit. Dieser wird billiger. Da Gleichrichtung jedoch immer gleichzeitig auch Verlust des Vorzeichens bedeutet, muß dafür gesorgt werden, daß ein Vorzeichensignal gebildet wird, das während der gesamten Weiterverarbeitung bis hin zur Summiereinrichtung als Begleiter der zu verarbeitenden Signalanteile auftritt und das die Anteile letztendlich vor der Anzeige vorzeichengerecht wieder zusammengefügt. Als Träger der Vorzeicheninformation bietet sich jedoch in optimal einfacher und überraschender Weise jenes 1 bit an, das vom Analog-Digital-Wandler nicht mehr generiert werden muß, sondern jetzt vom Vorzeichendetektor direkt gebildet und als Träger der Vorzeicheninformation herangezogen werden kann. Im Schaltbild der Fig. 3 ist der Verstärker 6 demnach gleichzeitig als Vorzeichendetektor für positive und negative Anteile der anfallenden Echosignale ausgebildet. Je nach erfaßtem Vorzeichen wird dann ein Signal erzeugt, das über eine Vorzeichensignalleitung 12a die Kombination des Multiplexers 9 mit dem Zweiterkomplementbildner 10 im Sinne einer Weiche für das Signal des Analog-Digital-Umsetzers 8 steuert. Bei vorliegendem Ausführungsbeispiel arbeitet der Verstärker 6 so, daß er lediglich beim Vorliegen negativer Anteile des Echosignals E (t) ein Vorzeichenbit erzeugt und über die Vorzeichsignalleitung 12a zum Multiplexer 9 und Zweierkomplementbildner 10 führt. Die Schaltung beider Bauteile 9 und 10 erfolgt dabei in Abhängigkeit vom Vorzeichensignal in der Weise, daß bei signalloser Vorzeichensignalleitung 12a, d. h. beim Vorliegen von positiven Signalkomponenten, die Ausgangsinformation des Analog-Digital-Wandlers 8 zusammen mit dem Vorzeichen-bit über den Datenmultiplexer 9 direkt an den Dreierverband 11 der Teilzeilenspeicher I, II, III weitergeleitet wird. Werden hingegen negative Komponenten registriert, so wird über das dann jeweils in der Vorzeichensignalleitung 12a anfallende Signal die Ausgangsinformation des Analog-Digital-Umsetzers 8 auf den Eingang des Zweierkomplementbildners 10 umgeschaltet. Letzterer bildet dann das Zweierkomplement 2-K zur Ausgangsinformation des Analog-Digital-Wandlers und leitet dann die Zweierkomplementinformation zusammen mit dem Vorzeichen-bit auf den Dreierverband 11 der Teilzeilenspeicher weiter. Hier erfolgt dann Verzögerung in jenen Funktionsweisen, wie sie bereits vorstehend anhand der Fig. 1 und 2 erläutert wurden. Die Steuerung der jeweiligen Funktion übernehmen wieder Programmspeicher 12 und/oder 13, die in Verbindung mit Adressenzählern und Freigabegliedern jeden Dreierverband 11 aus Teilzeilenspeichern separat steuern. Im Prinzipschaltbild der Fig. 3 definiert der Block 14 einen linearen Adressenzähler für Schreiben S und der Block 15 den Erzeuger für die Schreibfreigabeimpulse. Entsprechend stellen der Block 16 einen Adressenzähler für Lesen L und der Block 17 einen Adressenaddierer dar, während der Block 18 ein Adressen-Multiplexer für die Aufsuche der Adressen für Schreiben S und Lesen L ist. Im Ausführungsbeispiel der Fig. 3 liefert der Programmgeber 12 speziell die Informationen für die Einstellung der Verzögerungszeiten nach der Beziehung $T_{RQ}$ ($\varphi, \varkappa, \varrho = m$). T ist wieder die Verzögerungszeit, und R steht für den Empfangsfall, während Q wieder die Information »quantisiert« gibt. $\varphi$ ist wieder der Schwenkwinkel und $\varkappa$ der Ort des angesteuerten Wandlerelementes an der Wandlerelementreihe. Der Parameter $\varrho$ definiert die Eindringtiefe und m den letzten einer vorgegebenen Zahl 0 bis m von Fokussierungsbereichen, die schrittweise über den gesamten Untersuchungstiefenbereich einstellbar sind. Der Programmgeber 13 stellt hingegen Steuerprogramme für dynamische Fokussierung zur Verfügung, sofern diese benötigt werden. Das Programm der dynamischen Fokussierung ist nach der Beziehung

$$\sum_{\varrho=0}^{m} \{T_{RQ}(\varphi, \varkappa, \varrho) - T_{RQ}(\varphi, \varkappa, \varrho = m)\}$$

aufgebaut. Beide Programmgeber 12, 13 sind sowohl in Kombination als auch einzeln unter Nichtaktivierung des anderen einsetzbar.

Die Prinzipschaltung zur Weiterverarbeitung der von jedem einzelnen Wandlerelement W1 bis Wn stammenden Signale im Sinne der phasengerechten Zusammenfügung zeigt die Fig. 4. In dieser Figur ist wieder die Gesamtreihe aller Wandlerelemente mit W1 bis Wn angedeutet. Auf jedes Wandlerelement folgt dann ein Block B1 bis Bn, von denen jeder entsprechend dem Prinzipschaltbild der Fig. 3 aufgebaut ist. Die Ausgänge sämtlicher Blöcke B1 bis Bn gehen dann schließlich auf ein digitales Addierwerk 19 zur Aufaddierung der Signale. Aufgrund vorstehend erläuterter Wahl der Kombination eines Multiplexers mit einem Zweierkomplementbildner kann das Digital-Addierwerk 19 in besonders einfacher Weise als einfache Summierschaltung ausgelegt sein. Ohne Einsatz eines Zweierkomplementbildners müßten hingegen sowohl Summen als auch Differenzen gebildet werden, wodurch sich der Aufwand des Addierwerkes erheblich vergrößern würde. Eine reine Summierung ist deswegen möglich, weil wie vorstehend schon erläutert, jeder Negativanteil der Echosignale durch die Zweierkomplementbildung die Information des Minuszeichens in sich trägt. Nach erfolgter einfacher Addition geht dann das Summensignal auf eine nachgeschaltete Kette aus einem digitalen Ausgleichsverstärker 20 und einem digitalen Demodulator 21. Die demodulierten digitalen Signale werden dann schließlich über ein digitales Filter 22 einem Rundungsglied 23 zur bit-Zahlreduktion zugeleitet. Das am Ausgang des Rundungsgliedes 23, das beispielsweise eine 11-bit-Information in eine solche von 8 bit umwandelt, anfallende datenreduzierte Signal wird dann in Richtung des Pfeiles 24 über z. B. Bildspeicher od. dgl. einer Bildanzeigeröhre zur Aufzeichnung zugeleitet. Die Gesamtsteuerung der Glieder B1 bis Bn bzw. 19 bis 23 in der Fig. 4 erfolgt mittels zentraler Mikro-Programmsteuereinheit 25, die auch Änderungen des Programms der Programmgeber B1 bis Bn zuläßt. Zentraler Taktgeber ist ein Oszillator 26.

## Patentansprüche

1. Vorrichtung zur Ultraschallabtastung mit Ultraschall-Applikator, der durch eine Vielzahl einzelner Wandlerelemente zum Aussenden von Ultraschallsignalen und zum Empfang der Echosignale ausgebildet ist, wobei wenigstens im elektrischen Empfangskreis eine Verzögerungseinrichtung vorgesehen ist, die die anfallenden Echosignale für jedes Wandlerelement zeitlich so verzögert, daß sich in der zeitlichen Reihenfolge des Anfallens von Signalen an den einzelnen Elementen am Ausgang der Verzögerungseinrichtung Phasengleichheit der Einzelsignale ergibt, dadurch gekennzeichnet, daß die Verzögerungseinrichtung eine Vielzahl von Teilzeilenspeichern (11) umfaßt, von denen jeweils wenigstens immer drei (I, II, III) einem einzelnen Wandlerelement (W1 bis Wn) zugeordnet sind, wobei die Speicherkapazität jedes Teilzeilenspeichers für jedes einzelne Wandlerelement einen solchen Wert aufweist, der wenigstens der maximalen Verzögerungszeit ($\tau_{max}$) der Wandlerelementanordnung entspricht und wobei im Dreierverband der Teilzeilenspeicher eines jeden Wandlerelements eine solche Steuerung (12 bis 18) vorgesehen ist, daß, beginnend mit dem jeweils ersten Wandlerelement (W1), das von sämtlichen Elementen als erstes mit Information beaufschlagt wird, sowie für jedes folgende Wandlerelement (W2, W3 etc.) die dort anfallende Information in die Speicher des zugeordneten Dreierverbandes sequentiell eingeschrieben wird so lange, bis auch am letzten Wandlerelement, das von allen Elementen als letztes Information empfängt, wenigstens der erste Teilzeilenspeicher des Dreierverbandes, der zu diesem letzten Element gehört, mit Information gefüllt ist und dann ein Lesestartimpuls (STL) gegeben wird, aufgrund dessen die bis zu diesem Zeitpunkt in sämtlichen Speichern eingespeicherte Information gleichzeitig ausgelesen wird.

2. Vorrichtung nach Anspruch 1, dadurch gekennzeichnet, daß im Falle der Anwendung auf reinen Schwenkbetrieb, z. B. für Sektorscan, jeder Teilzeilenspeicher (I, II, III) eines Dreierverbandes auf die maximale Verzögerungszeit ($\tau_{max}$) der Wandlerelementanordnung abgestimmt ist.

3. Vorrichtung nach Anspruch 1 oder 2, dadurch gekennzeichnet, daß im Falle dynamischer Fokussierung bei Ansetzung der Mindestkapazität eines Teilzeilenspeichers (I, II, III) eine Fokuseinstellzeit ($\Delta F_{max}$) berücksichtigt ist.

4. Vorrichtung nach Anspruch 3, dadurch gekennzeichnet, daß im Falle einer Kombination von Schwenkbetrieb und dynamischer Fokussierung die Fokuseinstellzeit ($\Delta F_{max}$) sich zum Maximalwert der Verzögerungszeit ($\tau_{max}$) addiert.

5. Vorrichtung nach Anspruch 3, dadurch gekennzeichnet, daß bei reiner dynamischer Fokussierung die Speicherkapazität jedes Teilzeilenspeichers bei $\tau_{max} = 0$ auf den Wert der Fokuseinstellzeit ($\Delta F_{max}$) einstellbar ausgebildet sein kann.

6. Vorrichtung nach einem der Ansprüche 1 bis 5, dadurch gekennzeichnet, daß bei Auslegung auf digitale Verarbeitung Teilzeilenspeicher in RAM-Technik verwendet sind.

7. Vorrichtung nach Anspruch 6, dadurch gekennzeichnet, daß die Steuerung des Funktionsablaufes in den Teilzeilenspeichern softwaremäßig durch Programmgeber (12 und/oder 13) unter Zuhilfenahme von Adressenzählern (14, 16), Impulsfreigabeschaltungen (15) bzw. Adressenaddierern (17) über einen Adressenmultiplexer (18) erfolgt.

## Claims

1. Device for ultrasonic scanning, comprising an ultrasonic applicator which is formed by a plurality of individual transducer elements which serve to transmit ultrasonic signals and to receive the echo signals, where at least in the electrical receiving circuit there is arranged a delay device which delays the occurring echo signals for each transducer element until, during the time sequence of occurrence of signals at the individual elements, phase equality of the individual signals occurs at the output of the delay device, characterised in that the delay device comprises a plurality of sub-row stores (11) of which at least three (I, II, III) at any one time are assigned to an individual transducer element (W1 to Wn), where the storage capacity of each sub-row store for each individual transducer element is of a value which corresponds at least to the maximum delay time ($\tau_{max}$) of the transducer element arrangement, and where the set of three sub-row stores of each transducer element contains a control unit (12 to 18) which is such that, commencing with the first transducer element (W1) which is the first of all the elements to be supplied with information, an for each following transducer element (W2, W3 etc.) the information occurring therein is sequentially entered into the stores of the assigned set of three stores until also in the last transducer element which is the last of all the elements to receive information, at least the first of the set of three sub-row stores assigned to this element is filled with information and then a read-start pulse (STL) is emitted as a result of which the information stored until now in all the stores is read out simultan-eously.

2. Device as claimed in claim 1, characterised in that in the event of use for pure pivotal operation e.g. for sector scan, each of a set of three sub-row stores (I, II, III) ist tuned to the maximum delay time ($\tau_{max}$) of the transducer element arrangement.

3. Device as claimed in claim 1 or 2, characterised in that in the event of dynamic focussing, a focus setting time ($\Delta F_{max}$) is taken into account in the setting of the minimum capacity of a sub-row store (I, II, III).

4. Device as claimed in claim 3, characterised in that in the event of a combination of pivotal operation and dynamic focussing, the focus setting time ($\Delta F_{max}$) is added to the maximum value of the delay time ($\tau_{max}$).

5. Device as claimed in claim 3, characterised in that in the event of pure dynamic focussing, where $\tau_{max} = 0$, the storage capacity of each sub-row store can be designed to be adjustable to the value of the focus setting time $\Delta F_{max}$.

6. Device as claimed in one of the claims 1 to 5, characterised in that for digital processing, RAM technology sub-row stores are used.

7. Device as claimed in claim 6, characterised in that the software control of the function flow in the sub-row stores is controlled by programmers (12 and/or 13) with the assistance of address counters (14, 16), pulse release circuits (15) and address adders (17) via an address multiplexer (18).

## Revendications

1. Dispositif d'exploration par ultrasons à l'aide d'un applicateur à ultrasons, qui est réalisé par une pluralité d'éléments-convertisseurs individuels pour émettre des signaux ultrasonores et pour recevoir des signaux d'échos, au moins dans le circuit électrique de réception étant prévu un dispositif à retard qui retarde dans le temps les signaux d'échos reçus de telle façon pour chaque élément-convertisseur qu'il en résulte dans l'ordre temporel de la présence des signaux au niveau des différents éléments, une égalité de phase des signaux individuels à la sortie du dispositif à retard, caractérisé par le fait que le dispositif à retard comporte une pluralité de mémoires de lignes partielles (11) dont respectivement au moins trois (I, II, III) sont toujours associées à un élément-convertisseur individuel (W1 à Wn), la capacité de mémorisation de chaque mémoire de ligne partielle pour chaque élément convertisseur individuel présente une valeur telle qu'elle correspond au moins au temps de retard maximum ($\tau_{max}$) du dispositif à éléments-convertisseurs, alors que dans la combinaison ternaire des mémoires de lignes partielles de chacun des éléments-convertisseurs est prévue une commande (12 à 18) telle qu'en commençant par le premier élément-convertisseur (W1) qui parmi tous les éléments est chargé en premier avec une information, de même que pour chaque élément-convertisseur suivant (W2, W3 etc.), l'information qui apparaît est inscrite séquentiellement dans les mémoires de la combinaison ternaire associée, jusqu'à ce qu'également au niveau du dernier élément convertisseur, qui parmi tous les éléments reçoit en dernier une information, au moins la première mémoire de ligne partielle de la combinaison ternaire, qui appartient à ce dernier élément, soit remplie avec des informations et qu'ensuite une impulsion de déclenchement de lecture (STL) est donnée, en raison de laquelle sont lues simultanément les informations mémorisées jusqu'à cet instant dans toutes les mémoires.

2. Dispositif selon la revendication 1, caractérisé par le fait que si l'on utilise le fonctionnement en bascule pure, par exemple pour l'eploration par secteurs, chaque mémoire de

ligne partielle (I, II, III) d'une combinaison ternaire est ajustée sur la durée de retard maximale ($\tau_{max}$) du dispositif à éléments-convertisseurs.

3. Dispositif selon la revendication 1 ou 2, caractérisé par le fait que dans le cas d'une focalisation dynamique, et si l'on applique la capacité minimale d'une mémoire de ligne partielle (I, II, III), on tient compte de la durée de réglage du foyer ($\Delta F_{max}$).

4. Dispositif selon la revendication 3, caractérisé par le fait que dans le cas d'une combinaison du fonctionnement en bascule et de la focalisation dynamique, la durée de réglage du foyer ($\Delta F_{max}$) s'ajoute à la valeur maximale de la durée de retard ($\tau_{max}$).

5. Dispositif selon la revendication 3, caractérisé par le fait que dans le cas d'une focalisation dynamique pure, la capacité de mémorisation de chaque mémoire de ligne partielle peut être réalisée pour être réglable à $\tau_{max}=0$, à la valeur de la durée de réglage du foyer ($\Delta F_{max}$).

6. Dispositif selon l'une des revendications 1 à 5, caractérisé par le fait que lors de la conception pour un traitement numérique, on utilise des mémoires de lignes partielles dans la technique RAM.

7. Dispositif selon la revendication 6, caractérisé par le fait que la commande du déroulement de la fonction dans les mémoires de lignes partielles à lieu à la manière d'un logiciel par générateur de programme (12 et/ou 13), avec l'aide de compteurs d'adresses (14, 16), de circuits de libération d'impulsions (15) et d'additionneurs d'adresses (17), par l'intermédiaire d'un multiplexeur d'adresses (18).

FIG 1

FIG 2

0 027 618

FIG 3

FIG 4

11